# EUROPÄISCHE PATENTSCHRIFT

(11) **EP 1 970 139 B1**
(45) Veröffentlichungstag und Bekanntmachung des Hinweises auf die Patenterteilung: **29.04.2009**
(21) Anmeldenummer: 07005309.5
(22) Anmeldetag: 14.03.2007
(51) Int. Cl.: B21D 43/00, B25J 15/02, B23Q 7/04

(54) **Greifvorrichtung zum Ergreifen und Haltern länglicher Werkstücke, insbesondere bei Biegemaschinen**
Gripper device for gripping and retaining long workpieces, in particular for bending machines
Dispositif de prise destiné à la saisie et à la fixation de pièces usinées, en particuliers pour cintreuses

(43) Veröffentlichungstag der Anmeldung: 17.09.2008
(73) Patentinhaber: WAFIOS Aktiengesellschaft, 72764 Reutlingen (DE)
(72) Erfinder: Möck, Jörg, 72820 Sonnenbühl (DE); Holder, Stefan, 72124 Pliezhausen (DE); Frick, Paul, 72760 Reutlingen (DE)
(74) Vertreter: Geyer, Fehners & Partner

(56) Entgegenhaltungen:
- EP-A1- 0 021 539
- EP-A1- 0 857 547
- DE-A1- 2 946 469
- DE-A1- 3 133 205
- JP-A- 59 037 083
- US-A- 4 211 123
- US-A1- 2003 075 941

## Beschreibung

Die Erfindung bezieht sich auf eine Greifvorrichtung zum Ergreifen und Haltern länglicher Werkstücke, insbesondere bei Biegemaschinen, mit einem Gehäuse, das zwei jeweils zwischen einer geöffneten Aufnahmestellung und einer geschlossenen Klemmstellung bewegliche Greifbacken trägt, gemäß dem Oberbegriff des Anspruchs 1 (siehe z.B. JP-A-59 037 073).

Greifvorrichtungen zum Ergreifen und Haltern länglicher Werkstücke, wie etwa Leitungen, Rohre, Stäbe, Flexleitungen o.ä., werden bei einer Vielzahl technischer Maschinen eingesetzt, auf denen sie in irgendeiner Form bearbeitet werden. Insbesondere finden sich solche Greifvorrichtung z.B. bei Biegemaschinen, wie etwa Drahtbiegemaschinen oder Rohrbiegemaschinen, wobei sie dort sowohl dazu eingesetzt werden, ein Werkstück an einer bestimmten Stelle (etwa in einem Magazin, an einem Zulieferband oder an einer Bearbeitungsstation) zu erfassen und es anschließend z.B. zu einer nachgeschalteten Station (Bearbeitungsstation oder Ablageband) zu übergeben, wie auch dazu, ein aufgenommenes Werkstück in eine Bearbeitungsposition zu überführen, es während der Bearbeitung zu haltern und es anschließend ggf. auch noch an eine nachgeschaltete Abgabeposition weiterzureichen.

Dabei sind zum Einlegen, Ablegen, Transportieren und Fixieren der Werkstücke in einer einzelnen Rohr- oder Drahtbiegemaschine meist eine Mehrzahl von Greifern vorgesehen, von denen einer oder mehrere z.B. hauptsächlich zum Fixieren der Werkstücke beim Bearbeiten und andere in Form verfahrbarer Hilfsgreifer zum Stabilisieren des Werkstücks beim Biegen und zum Heranholen neuen Werkstücke aus dem Magazin dienen. Die Greifvorrichtungen sitzen dabei oftmals auf einem verschwenkbaren Greiferarm, wobei sie, insbesondere als Hilfsgreifer, auch am Grundgestell verfahrbar angebracht sind, und weisen ein Gehäuse auf, das zwei zwischen einer geöffneten Aufnahmestellung und einer geschlossenen Klemmstellung (zur Aufnahme des Werkstücks) bewegliche Greifbacken trägt.

Aus der DE 3620151 A1 ist bei einer Maschine zum Biegen stangenförmiger Werkstücke die Verwendung einer zentralen Halte- und Greifvorrichtung in Form eines Spannfutters bekannt, mittels derer das aufgenommene Werkstück auch um seine Längsachse gedreht werden kann. Bei Bedarf kann eine zweite Greifvorrichtung zum Einsatz kommen oder die Greifvorrichtung an einem Roboter angebracht werden. Diese Greifvorrichtungen sind aber relativ groß und platzgreifend. Der Aufbau des Spannfutters wird in der Druckschrift nicht näher erläutert.

In der DE 39 22 326 C2 sowie der EP 0 934 783 B1 sind Greifvorrichtungen beschrieben, die jeweils als ein einfacher, zylinderbetätigter Hebelmechanismus ausgeführt sind, wobei der jeweilige Zylinder direkt an der Greifvorrichtung sitzt und damit deren Masse insgesamt wiederum relativ groß ist.

Die Greifvorrichtungen aus der DE 60100 147 T2 sind jeweils mit zwei Greifbacken ausgestattet, welche zum Erfassen und Verklemmen des aufzunehmenden Werkstücks eine lineare Greifeinbewegung ausführen. Eine nähere Erläuterung der Greifbewegung findet sich in der Druckschrift jedoch nicht.

Der DE 603 01 913 T2 ist das Anbringen von Greifvorrichtungen an einem Portal entnehmbar. Dabei sitzen die Greifvorrichtungen auf Greiferarmen, die um eine zur Achse des aufzunehmenden Werkstücks parallele Achse verschwenkbar sind, wobei die Greifbewegung über Zylinder oder motorisch vorgenommen wird. Allerdings findet sich in der Druckschrift keine nähere Erläuterung der Greifvorrichtungen selbst.

Die DE 196 30 023 A1 beschreibt eine drehbare Greifvorrichtung, die mit jeweils um eine Drehachse verschwenkbaren Greifbacken ausgerüstet ist. Diese stehen miteinander über eine Verzahnung in Eingriff und werden über zwei Zylinder jeweils in ihre Klemmstellung verschwenkt. Bei dieser bekannten Greifanordnung handelt es sich jedoch um eine Bauweise mit erheblichem Platzbedarf, wobei die Greifvorrichtung an einem kreisförmigen Ring angebracht ist, wodurch auch der Biegefreiraum eingeschränkt ist.

Schließlich ist eine Greifvorrichtung der eingangs genannten Art aus der DE 20 2004 011 947 U1 bekannt. Diese Greifvorrichtung ist auf dem Maschinenbett verfahrbar, wobei sich über die spezielle Ausbildung der Greifvorrichtung selbst in der Druckschrift allerdings keine näheren Angaben finden.

Ausgehend hiervon liegt der Erfindung die Aufgabe zugrunde, eine Greifvorrichtung zur Verfügung zu stellen, die einen vergleichsweise einfachen und robusten sowie platzsparenden Aufbau aufweist, unterschiedliche Arbeitseinstellungen trotz nur eines Antriebs einnehmen kann und bei der die Klemmkraft auf das Werkstück stufenlos veränderbar ist.

Diese Aufgabe wird durch eine Greifvorrichtung mit den Merkmalen des Anspruchs 1. Die abhängigen Ansprüche definieren bevorzugte Ausführungen der Erfindung.

Das Steuerelement kann dabei in jeder geeigneten Weise ausgebildet sein, z.B. als Kniehebelanordnung zwischen dem Stangenende und jedem Greifbacken oder als eine Kulissenführung, durch welche die Verschwenkbewegung der Greifbacken in Abhängigkeit von der Verschiebestellung der Stange bestimmt und gesteuert werden. Ganz besonders bevorzugt ist das Steuerelement jedoch als ein Nockenkörper ausgeführt, dessen Nockenfläche die Steuerfläche bildet und der in seiner ausgefahrenen Endstellung zwischen die beiden ihm zugewandten Endbereich der Gleitbacken unter deren Aufspreizung eingeführt ist, wobei beide Gleitbacken in Richtung auf ihre geschlossene Endstellung hin federvorgespannt sind.

Die erfindungsgemäße Greifvorrichtung ist mit nur einer Bewegungsachse sehr einfach aufgebaut und kann mit nur einem einzigen Antrieb (nämlich dem der Stange) unterschiedliche Arbeitsstellungen einnehmen, um den speziellen Anforderungen z.B. in einer Rohr- oder Drahtbiegemaschine gerecht zu werden. Die erfindungsgemäße Greifvorrichtung läßt sich an einem Greiferarm, der z.B. fest am Rahmen der Biegemaschine sitzt, anbringen, so daß nur die Verschwenkbewegung des Greiferarms und die Längsbewegung der Greifvorrichtung entlang deren Mittelachse möglich ist, wodurch sowohl ein Verschwenken wie auch ein Fixieren des Werkstücks (etwa während eines Bearbeitungsvorgangs) ermöglicht wird.

Soll mit der erfindungsgemäßen Greifvorrichtung jedoch auch noch ein Verfahren entlang dem Werkstück möglich sein, wird der Greiferarm, an dem sie montiert wird, entsprechend verfahrbar am Maschinengestell angebracht.

Durch eine geeignete Form des Steuerelementes als Betätigungselement für die Greifbacken kann deren Klemmkraft beim Haltern des Werkstücks stufenlos durch eine entsprechende Einstellung der Position der Betätigungsstangen verändert werden. Die erfindungsgemäße Greifvorrichtung läßt sich vorteilhafterweise zusätzlich auch noch so aufrüsten, daß mit ihr eine Drehbewegung um die Werkstücklängsachse oder um die Längsachse der Verschiebestange (oder um beide) möglich ist, wodurch sich dann ein ganz besonders vielseitiger Einsatz einer solchermaßen ausgestatteten erfindungsgemäßen Greifvorrichtung ergibt.

Dadurch, daß bei Verwendung eines Nockenkörpers als Steuerelement die Greifbacken stets in Öffnungsrichtung federvorgespannt sind und ihre Öffnungsstellung zum Ergreifen eines Werkstücks form- und kraftschlüssig durch Einfahren des Nockenkörpers zwischen die im Gehäuse liegenden Hebelenden der Greifbacken erzwungen wird, ist ein relativ einfacher Aufbau eines besonders robusten und gut wirksamen Steuerungsmechanismusses für das Öffnen und Schließen der Greifbacken gegeben, wobei die Konstruktion mit wenig Einzelteilen und geringem Aufwand herstell- und montierbar ist.

Das verschiebliche Anbringen des Gehäuses, welches die Greifbacken trägt, relativ zum Führungskörper entlang der Längsachse der gesamten Greifvorrichtung über einen bestimmten Verfahrweg hinweg und seine Federvorspannung in die ausgefahrene Stellung hin löst bei einer Bewegung der Betätigungsstange für die beiden Greifbacken in Ausfahrrichtung zunächst durch die Federvorspannung ein Verfahren des Gehäuses über seinen maximalen Ausfahrweg hinweg aus, wonach erst, bei weiter fortgesetzter Ausfahrbewegung der Betätigungsstange, also in der voll ausgefahrenen Stellung des Gehäuses, die Schließbewegung der Greifbacken ausgelöst wird, indem dann das Steuerelement, etwa als Nockenkörper, z.B. zwischen die beiden ihm zugewandten Hebelenden der Greifbacken eintritt. Bis diese Schließbewegung eingeleitet wird, befinden sich die beiden Greifbacken, z.B. aufgrund einer Vorspannung in Öffnungsrichtung hin, in einem geöffneten Zustand, so daß beim Ausfahren des Gehäuses die Greifbacken z.B. von unten (oder auch von der Seite her) gegen das aufzunehmende Werkstück (etwa einen Draht) in Öffnungsstellung angefahren werden können und erst nach dessen Einlauf zwischen die geöffneten Greifbacken, im ausgefahrenen Endzustand des Gehäuses, die Schließbewegung der Greifbacken über das Steuerelement durch dessen weiter fortgesetzte Ausfahrbewegung eingeleitet und schließlich die Schließstellung erreicht wird.

Soll das erfaßte Werkstück wieder freigegeben werden, werden bei einer Bewegung des Steuerelementes in Gegenrichtung (Einfahrrichtung) die Greifbacken entweder form- oder kraftschlüssig durch dieses oder durch eine geeignete Federvorspannung in ihre geöffnete Endstellung überführt. Ist das Steuerelement als Nockenkörper ausgeführt, wird dieser bei stets voll ausgefahrenem Gehäuse aus seiner Stellung zwischen den beiden Greifbacken herausgefahren. Dabei werden, entsprechend der Querschnittsform des Nockenkörpers, die Nocken unter Wirkung der Federvorspannung wieder in Richtung auf ihre geöffnete Position so lange verschwenkt, bis der Nockenkörper in Anlage zu einem entsprechenden Anschlag im Gehäuse gelangt ist. Wird er, bei dann voll geöffneten Greifbacken, noch weiter in Schließrichtung bewegt, führt dies dazu, daß das ausgefahrene Gehäuse nunmehr unter Beibehaltung der offenen Stellung der Greifbacken entgegen der Federvorspannung zwischen Gehäuse und Führungskörper so lange in Richtung auf den Führungskörper hin bewegt wird, bis es an diesem zu einer Anlage kommt.

Dabei kann allein durch den Motor, mittels dessen die Führungsstange in Ausfahr- und Einfahrrichtung antreibbar ist, sowohl das Verfahren des Gehäuses relativ zum Führungskörper wie auch in dessen ausgefahrener Position das Öffnen bzw. Schließen der Greifbacken gesteuert werden.

Auch hierbei handelt es sich um einen relativ einfachen mechanischen Aufbau, mit dem alle diese unterschiedlichen Bewegungs- bzw. Arbeitsstellungen der Greifvorrichtung unschwer und funktionssicher gesteuert werden können.

Neben dem einfachen Aufbau weist die erfindungsgemäße Greifvorrichtung aber auch einen vergleichsweise sehr geringen Platzbedarf auf, wobei bei ihrem Einsatz auch der Biegefreiraum so gut wie überhaupt nicht eingeschränkt wird.

Bei der erfindungsgemäßen Greifvorrichtung kann die verschiebliche Lagerung des Gehäuses im Führungskörper in jeder geeigneten Weise vorgenommen werden. Besonders bevorzugt wird das Gehäuse jedoch über zwei einander bezüglich der Stange direkt gegenüberliegende Führungsstangen im Führungskörper verschieblich gelagert, wobei jede Stange jeweils mit einem Anschlagkopf derart versehen ist, daß dieser bei maximalem Ausfahrweg des Gehäuses gegen eine Stopfläche im Führungskörper zur Anlage kommt und damit eine weitere Ausfahrbewegung verhindert wird. Auch diese verschiebliche Lagerung des Gehäuses mittels zweier Führungsstangen im Führungskörper stellt einen einfachen und unkomplizierten Aufbau dar, der wiederum zur Einfachheit der Gesamtkonstruktion nachdrücklich beiträgt.

Als Anschlagkopf an jeder Führungsstange wird bevorzugt ein Bauteil aus einem elastischen, den Impuls beim Anschlag dämpfenden Wertstoff eingesetzt, wobei es sich, erneut bevorzugt, jeweils um einen Bolzen aus Kunststoff handelt.

In weiterer bevorzugter Ausgestaltung der erfindungsgemäßen Greifvorrichtung erfolgt der Aufbau der Federvorspannung zwischen Gehäuse und Führungskörper mittels einer Schraubenfeder, welche um die Betätigungsstange für das Steuerelement herum angeordnet ist und deren Endbereiche jeweils in einer entsprechenden Vertiefung im Führungskörper bzw. im Gehäuse sitzen, wobei diese Schraubenfeder in jeder Position des Gehäuses relativ zum Führungskörper auf Druck vorgespannt ist. Auch diese Gestaltung bildet wiederum einen sehr einfachen, zuverlässig mechanisch wirksamen Aufbau der gewünschten Federvorspannung zwischen Gehäuse und Führungskörper, der auch stets eine zuverlässige Funktion hinsichtlich der durch ihn bewirkten Relativbewegung zwischen Gehäuse und Führungskörper sicherstellt.

Bevorzugt sind die beiden Greifbacken jeweils als zweiarmiger Hebel ausgebildet derart, daß ihre Drehachse in einen mittleren Bereich jedes Greifbackens liegt, so daß bei jedem Greifbacken ein jeweils über das Gehäuse nach außen vorstehender Hebelarm zur Aufnahme des zu behandelnden Werkstücks dient, während auf der anderen Seite der Drehachse, also an dem anderen, vollständig im Inneren des Gehäuses liegenden Endbereich des anderen Hebelarms der Eingriff mit dem Steuerelement zum Schließen der Greifbacken erfolgen kann. Bevorzugt sind dabei an den im Gehäuse innenliegenden Enden der Greifbacken drehbar gelagerte Rollen vorgesehen, mit denen das Steuerelement beim Einfahren zwischen die Greifbacken in Eingriff tritt und die sich auf der Steuerfläche des Steuerelementes abstützen.

Der Antrieb der Stange, die das Steuerelement bewegt, kann in jeder geeigneten Weise vorgesehen werden. Besonders bevorzugt wird die Stange jedoch über einen entsprechenden pneumatischen Zylinder betätigt, über den die Bewegung der Stange in deren beiden einander entgegengesetzten Bewegungsrichtungen einfach und auch platzsparend vorgesehen werden kann.

Die beiden Greifbacken sind bei der erfindungsgemäßen Greifvorrichtung bevorzugt mittels einer Zugfeder in Richtung auf ihre geöffnete Aufnahmestellung hin vorgespannt, wobei, erneut bevorzugt, diese Zugfeder an jedem ihrer Endbereiche jeweils in eine entsprechende Aufnahmeöffnung des zugeordneten Greifbackens hineinragt und in dieser mit ihrem Ende am Greifbacken befestigt ist.

Die Erfindung wird nachfolgend anhand der Zeichnung im Prinzip beispielshalber noch näher erläutert. Es zeigen:
- Fig. 1: eine perspektivische Ansicht eines an einem Maschinengestell relativ zu diesem nicht verfahrbar angebrachten Greifers mit einer erfindungsgemäßen Greifvorrichtung;
- Fig. 2: eine perspektivische Ansicht eines Greifers mit einer anderen Ausführungsform einer erfindungsgemäßen Greifvorrichtung, wobei der Greifer an einem Maschinengestell in Längsrichtung zu diesem verfahrbar angebracht ist;
- Fig. 3: eine vergrößerte perspektivische Teilansicht einer erfindungsgemäßen Greifvorrichtung mit ausgefahrenem Gehäuse, sowie
- Fig. 4, 5, 6 und 7: Längsschnittdarstellungen durch eine Anordnung gemäß Fig. 3 mit jeweils gleicher Schnittlage, jedoch mit vier zueinander unterschiedlichen Ausfahrstellungen der Stange mit dem Steuerelement in Form eines Nockenkörpers.

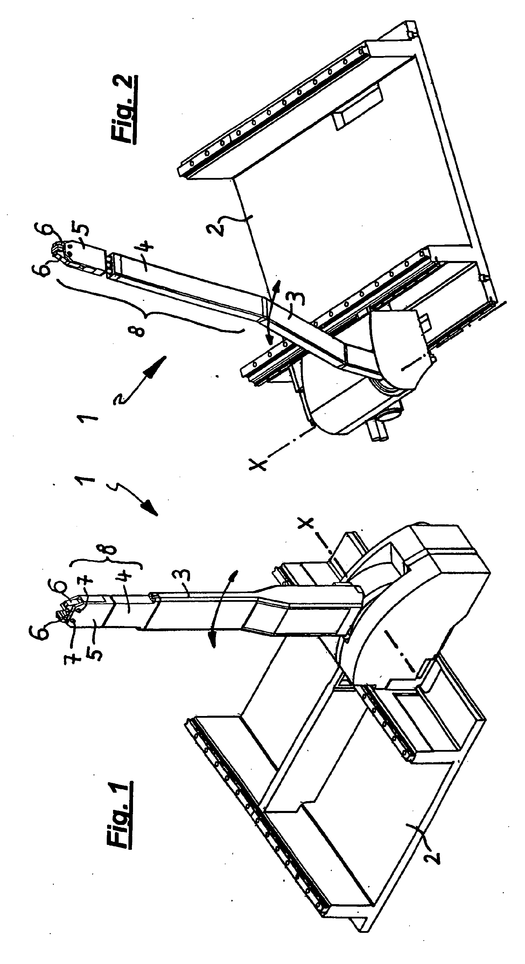

Die Fig. 1 und 2 zeigen zwei unterschiedliche Ausgestaltungen von Greifern, die jeweils eine Greifvorrichtung aufweisen und allgemein mit dem Bezugszeichen 1 bezeichnet sind.

In der nachfolgenden Beschreibung sind einander entsprechende Teile stets mit gleichem Bezugszeichen bezeichnet.

Fig. 1 zeigt eine perspektivische Ansicht eines als Auslaufgreifer oder Haltezange eingesetzten Greifers 1, der an einem Grundgestell 2 einer Drahtbiegemaschine, in der Mitte desselben, angebracht ist und hauptsächlich zum Fixieren der aufgenommenen Werkstücke beim Bearbeiten dient.

Fig. 2 zeigt demgegenüber, wieder in perspektivischer Ansicht, einen Greifer 1, der als Hilfsgreifer dient und am Grundgestell 2 einer Biegemaschine, jedoch auch relativ zu diesem verfahrbar, angebracht ist. Solche verfahrbaren Hilfsgreifer stabilisieren die Werkstücke beim Biegen und holen neue Werkstücke aus dem Magazin oder einem Anlieferband.

Beide Greifer 1 weisen jeweils einen Greiferarm 3 auf, der um eine Verschwenkachse X verschwenkbar ist und auf dem jeweils eine Greifvorrichtung 8 befestigt ist.

Der Greiferarm 3 trägt an seinem frei vorstehendem Ende einen Führungskörper 4, an den sich ein Gehäuse 5 anschließt, das im Führungskörper 4 verschieblich und relativ zu diesem beweglich gelagert ist. Die aus dem Führungskörper 4 und dem Gehäuse 5 bestehende Baugruppe (einschließlich deren Einbauten) stellt die eigentliche Greifvorrichtung 8 dar.

Am Gehäuse 5 sind, jeweils über eine Drehachse 7 verschwenkbar angelenkt, zwei aus ihm vorstehende Greifbacken 6 vorgesehen, die zueinander verschwenkt werden können, und zwar zwischen einem geöffneten und einem geschlossenen Zustand.

Während die Darstellung der Fig. 1 eine Stellung zeigt, bei welcher das Gehäuse 5 gegen den Führungskörper 4 anliegt, sich also in seiner angefahrenen Position befindet, in welcher die Greifbacken 6 geöffnet sind, steht in der Darstellung nach Fig. 2 das Gehäuse 5 in seiner vom Führungskörper 4 ausgefahrenen Position, in welcher die beiden Greifbacken 6 ihre geschlossene Klemmstellung einnehmen.

Wie die Fig. 1 und 2 ferner zeigen, ist der Führungskörper 4 jeweils fest am Greiferarm 3 über geeignete, im einzelnen nicht dargestellte Verbindungsmittel (wie bevorzugt Schrauben) befestigt.

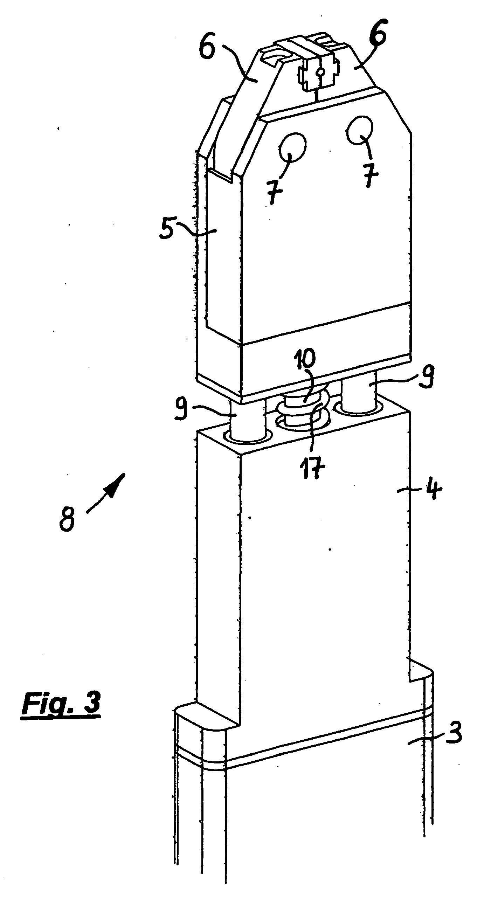

In Fig. 3 ist eine deutlich vergrößerte perspektivische Darstellung eines Greifers 1 gezeigt, wie er der Ausführungsform aus Fig. 1 entspricht, wobei der konstruktive Aufbau völlig auch für eine andere Ausführungsform, etwa wie sie in Fig. 2 gezeigt ist, gilt.

Anders als bei der Darstellung der Fig. 1 ist jedoch in Fig. 3 die vom Führungskörper 4 weg ausgefahrene Endstellung des Gehäuses 5, das die Klemmbacken 6 trägt, wiedergegeben.

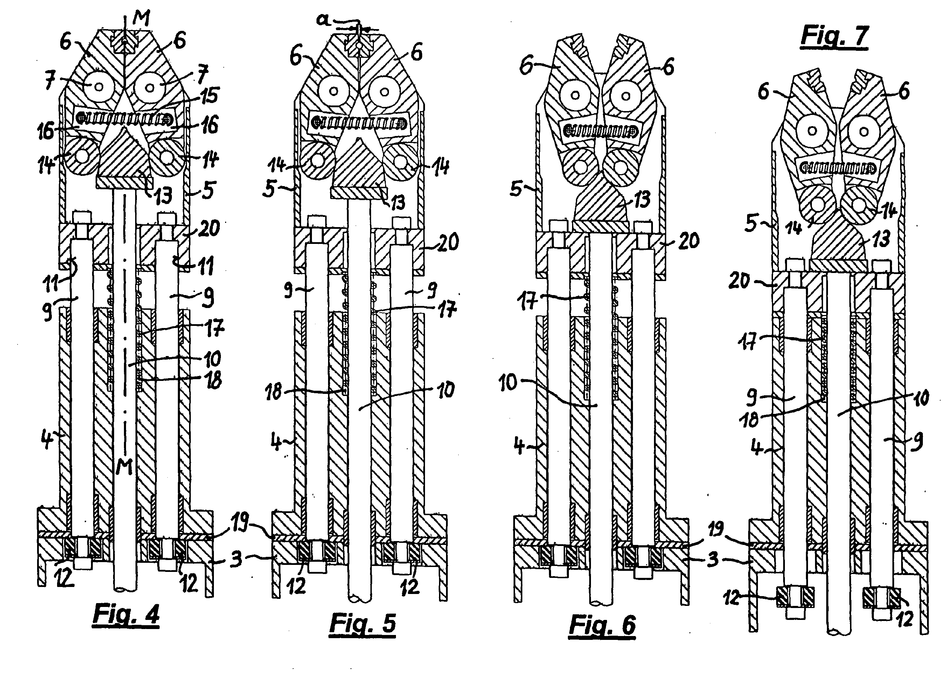

Fig. 4 zeigt (in nicht vergrößerter Darstellung) einen Längs-Mittelschnitt durch die Anordnung der Fig. 3.

Die Greifvorrichtung 8 wird über geeignete Befestigungsmittel, die schon weiter oben erwähnt und in den Figuren nicht im einzelnen dargestellt sind, am vorstehenden Ende des Greiferarmes 3 eines Hilfsgreifers, einer Haltezange oder eines Auslaufgreifers angebracht, wie dies in den Fig. 1 und 2 gezeigt ist.

Der Führungskörper 4 sitzt direkt auf dem Greiferarm 3, wobei im Führungskörper 4, wie aus den Fig. 3 und insbesondere Fig. 4 ersichtlich, zwei Führungsstangen 9 in einer zur Längsmittelachse M von Greiferarm 3 und Führungskörper 4 jeweils parallelen Richtung verschieblich gelagert sind.

Weiterhin ist im Führungskörper 4 eine ebenfalls in Richtung der Längsmittelachse M verschiebliche Stange 10 gelagert, und zwar so, daß die Längsmittelachse dieser Stange 10 mit der Längsmittelachse ***M*** der Greifvorrichtung 8 zusammenfällt.

Die Führungsstangen 9 sind jeweils an ihren oberen, dem Gehäuse 5 zugewandten Enden in entsprechende Aufnahme-Aussparungen 11 desselben eingeführt und dort in einer geeigneten Weise mit dem Bodenbereich 20 des Gehäuses 5 verbunden, wobei diese Verbindung in den Fig. 3 bis 7 nur ganz prinzipiell illustriert ist.

An den unteren Enden der Führungsstange 9 sind federnd-nachgiebige Kunststoff-Bolzen bzw. Kunststoff-Ringe 12 befestigt, die einen größeren Außendurchmesser als die für jede Führungsstange 9 im Führungskörper 4 vorgesehene Durchlaufbohrung aufweisen, so daß beim Verfahren des Gehäuses 5 in Richtung vom Führungskörper 4 weg bei Erreichen der maximal gewünschten Ausfahrstellung (vgl. Fig. 3 und 4) jeweils die Kunststoff-Bolzen 12 gegen die ihnen zugewandte Abschlußfläche des Führungskörpers 4 bzw. eine diese abdeckende Zwischenplatte 19 anlaufen, die damit einen Anschlag für die Kunststoff-Bolzen 12 bildet und die Ausfahrbewegung der Führungsstange 9 beendet.

Die Betätigungsstange 10 durchläuft den Führungskörper 4 und tritt hinter diesem in den Innenraum des Greiferarms 3 ein, wo sie an einer (in den Figuren nicht gezeigten) Stelle von einem Pneumatik-Zylinder in Richtung der Mittelachse ***M*** bewegt werden kann.

Am oberen Ende der Stange 10 ist ein Steuerelement in Form eines Nockenkörpers 13 befestigt, dessen Nockenkontur (Steuerfläche) im Querschnitt, wie die Fig. 4 bis 7 zeigen, eine zur Mittelachse ***M*** symmetrische, in deren Richtung kontinuierlich abnehmende Breite aufweist, wobei die spezielle Nockenform dabei so gewählt ist, daß ein gewünschter Verlauf der Öffnungs- und Schließbewegung der Greifbacken 6 bei deren Verdrehung um die Drehachsen 7 bei einer vorgegebenen Größe der Einfahrbewegung des Nockenkörpers 13 zwischen am unteren Endbereich jedes Greifbackens 6 angebrachte Rollen 14 erreicht wird.

Die jeweilige Drehachse 7 eines Greifbackens 6 befindet sich in einem mittleren Bereich desselben zwischen dessen beiden Enden, wobei der jeweilige Hebelarm entsprechend den gewünschten Klemmkräften und den Druckkräften des Nockenkörpers 13 geeignet gewählt sind.

Wie die Fig. 4 bis 7 weiterhin zeigen, ist bei den Greifbacken 6 zwischen deren Drehachsen 7 und den Rollen 14 eine Zug-Vorspannfeder 15 angebracht, die mit jedem ihrer beiden Endbereiche jeweils in eine spezielle Ausnehmung 16 eines Greifbackens 6 hineinragt und dort mit dem Ende an diesem befestigt ist.

Die Feder 15 ist in Zugrichtung vorgespannt, und zwar so, daß in jeder möglichen Stellung der beiden Greifbacken 6, also auch in deren voll geöffneter Stellung (vgl. Fig. 7), stets eine Zug-Vorspannung auf die Greifbacken 6 ausgeübt wird. Auf diese Weise wirkt stets eine Federvorspannung auf die Greifbacken 6 in Richtung auf deren geöffnete Stellung hin (vgl. Fig. 6 und 7).

Auch zwischen dem Führungsteil 4 und dem Gehäuse 5 ist eine Druckfeder 17 vorgesehen, die um die Stange 10 herum im mittleren Bereich der Greifvorrichtung 8 verläuft und in jeder Relativstellung der beiden Teile 4 und 5 zueinander stets eine Druckvorspannung in Richtung auf die ausgefahrene Stellung des Gehäuses 5 hin aufbaut. Diese Druckfeder 17 stützt sich mit ihrem oberen Ende gegen die Unterseite des Gehäuses 5 ab, während sie an ihrer anderen axial Seite in einen ringförmigen Aufnahmeraum 18 hineinragt, der im Führungsteil 4 in dessen mittlerem Bereich um die Stange 10 herum ausgebildet ist, wie dies die Fig. 4 bis 7 zeigen. Die axiale Länge des ringförmigen Aufnahmeraumes 18 ist so bemessen, daß im ganz an den Führungskörper 4 herangefahrenen Zustand des Gehäuses 5 die Druckfeder 17 vollständig im ringförmigen Aufnahmeraum 18 sitzt, wie dies Fig. 7 zeigt.

Die Vorspannung der Druckfeder 17 ist so gewählt, daß sie auch im ausgefahrenen Zustand des Gehäuses 5, wie er in den Fig. 3 und 4 dargestellt ist, noch immer eine Vorspannung in Ausfahrrichtung ausübt.

Nunmehr sei auf die in den Fig. 4 bis 7 dargestellten unterschiedlichen Arbeitsstellungen der Greifvorrichtung 8 im einzelnen eingegangen:

Fig. 4 zeigt die geschlossene Stellung der Greifbacken 6, zwischen denen ein (nicht gezeigtes) Werkstück fest fixiert ist.

Die Stange 10 ist voll ausgefahren und damit der Nockenkörper 13 zwischen die Rollen 14 eingeschoben, wobei er sie nach außen drückt.

Das Gehäuse 5 wird von der Druckfeder 17 in seine ausgefahrene Stellung gedrückt, in der die Führungsstange 9 mit ihren Kunststoffbolzen 12 gegen die Unterseite einer zwischen dem Greiferarm 3 und dem Führungsteil 4 angeordneten Zwischenplatte 19 als Anschlag anliegen.

In Fig. 5 ist eine Stellung gezeigt, in welcher das Gehäuse 5 noch immer ganz ausgefahren ist, während die Stange 10 mit dem Nockenkörper 13 etwas zurückgezogen wurde, und zwar so weit, daß die beiden Greifbacken 6 sich nicht mehr in ihrer vollständig geschlossenen Position befinden, wie diese noch in Fig. 6 vorliegt, sondern einen sehr kleinen Spalt a öffnen, der jedoch kleiner ist als der Durchmesser des zwischen den Greifbacken 6 aufgenommenen Werkstückes (z.B. eines Drahtes). In dieser Stellung können die Greifbacken 6 und damit die Greifvorrichtung 8 in Längsrichtung des aufgenommenen Werkstückes an diesem entlang fahren bzw. das Werkstück kann in der Greifvorrichtung 8 relativ zu dieser verschoben werden. Es ist jedoch dabei nicht möglich, das Werkstück aus der Greifvorrichtung 8 zu entnehmen.

Fig. 6 zeigt eine geöffnete Stellung der Greifvorrichtung 8. Dabei ist die Stange 10 soweit abgesenkt worden, daß der Nockenkörper 13 mit seiner Unterseite oben auf dem Boden 20 des Gehäuses 5 zur Anlage gekommen ist, wobei in dieser Stellung die Greifbacken 6 ganz geöffnet sind. Das Werkstück kann nun nach oben aus der Greifvorrichtung 8 entnommen werden, wobei allerdings ein Verschwenken der Greifvorrichtung 8 um die Verschwenkachse X ohne vorherige Entnahme des Werkstücks nicht möglich ist.

Fig. 7 zeigt schließlich die ganz abgesenkte und geöffnete Stellung der Greifvorrichtung 8. Die Stange 10 ist ganz nach unten abgesenkt und hat dabei das Gehäuse 5 entgegen der Wirkung der Druckfeder 19 ebenfalls soweit nach unten gezogen, bis das Gehäuse 5 an der Oberseite des Führungskörpers 4 zur Anlage gekommen ist.

Dabei wurden auch die Führungsstangen 9 nach unten abgesenkt und die federnden Bauteile 12 (Kunststoffbolzen) stützen sich nun nicht mehr gegen die Zwischenplatte 19 an der Unterseite des Führungsteiles 4 ab, wie dies Fig. 7 zeigt.

Damit kann das Werkstück ohne Vertikalbewegung aus der Greifvorrichtung 8 entfernt werden bzw. die Greifvorrichtung kann wegschwenken, ohne mit dem Werkstück zu kollidieren.

## Patentansprüche

1. Greifvorrichtung (8) zum Ergreifen und Haltern länglicher Werkstücke, insbesondere bei Biegemaschinen, mit
- einem Gehäuse (5), das zwei jeweils zwischen einer geöffneten Aufnahmestellung und einer geschlossenen Klemmstellung bewegliche Greifbacken (6) trägt, und mit einem Führungskörper (4), der das Gehäuse (5) über einen vorgegebenen maximalen Ausfahrweg hinweg von einer eingefahrenen Ausgangsstellung in eine ausgefahrene Endstellung verschieblich lagert, wobei am in Ausfahrrichtung des Gehäuses (5) liegendem Endbereich desselben die beiden Greifbacken (6), jeweils um eine Drehachse (7) verschwenkbar, angebracht sind,
- wobei Führungskörper (4) und Gehäuse (5) entlang einer gemeinsamen Längsachse (M) ausgerichtet sind, in der auch ein relativ zu Gehäuse (5) und Greifbacken (6) bewegliches Steuerelement (13) am Ende einer im Führungskörper (4) verschieblichen Stange (10) sitzt, das in einer senkrecht zu den Drehachsen (7) der Greifbacken (6) liegenden, die Längsachse (M) umfassenden Schnittebene eine zur Längsachse (M) symmetrische, sich in Ausfahrrichtung von der Stange (10) weg verjüngende Steuerfläche aufweist, wobei die Mittelachse des Steuerelementes (13) mittig zwischen beiden Greifbacken (6) liegt und das Steuerelement (13) zwischen einer ausgefahrenen Endstellung, in welcher es die beiden ihm zugewandten Endbereiche beider Greifbacken (6) zur Einnahme der Klemmstellung der Greifbacken (6) auseinanderspreizt, und einer eingefahrenen Endstellung, in welcher die Endbereiche der Greifbacken (6) zur Einnahme ihrer geöffneten Aufnahmestellung zusammenlaufen, verschiebbar ist, und das Steuerelement (13) in seiner eingefahrenen Endstellung im Gehäuse (5) gegen einen Anschlag anläuft, **dadurch gekennzeichnet, daß** sich das Gehäuse (5) an den Führungskörper (4) derart anschließt, daß es in seiner eingefahrenen Ausgangsstellung an der ihm zugewandten Seite des Führungskörpers (4) anliegt und in seiner ausgefahrenen Endstellung vom Führungskörper um den maximalen Ausfahrweg entfernt ist, wobei das Gehäuse (5) stets in Richtung vom Führungskörper (4) weg federvorgespannt (17) ist, und daß das Steuerelement (13) beim Einfahren nach Erreichen seiner eingefahrenen Endstellung bei einer weiteren Bewegung in seiner Einfahrrichtung das Gehäuse (5) entgegen dessen Federvorspannung (17) relativ zum Führungskörper (4) bis zur Anlage an diesem mitnimmt.

2. Greifvorrichtung nach Anspruch 1, bei der das Gehäuse (5) über zwei einander bezüglich der Stange (10) direkt gegenüberliegende, zu dieser parallele Führungsstangen (9) im Führungskörper (4) verschieblich gelagert ist, die jeweils mit einem Anschlagkopf (12) versehen sind, der bei maximalem Ausfahrweg des Gehäuses (5) gegen eine Stopfläche am Führungskörper (4) zur Anlage kommt.

3. Greifvorrichtung nach Anspruch 2, bei welcher der Anschlagkopf (12) jeder Führungsstange (9) als ein elastisches Teil ausgebildet ist.

4. Greifvorrichtung nach Anspruch 3, bei der jedes elastische Teil (12) ein Kunststoffbolzen ist.

5. Greifvorrichtung nach einem der Ansprüche 1 bis 4, bei welcher die Federvorspannung zwischen Gehäuse (5) und Führungskörper (4) mittels einer Schraubenfeder (17) erfolgt, die um die Stange (10) herum angeordnet ist, deren Endbereiche jeweils in einer entsprechenden Vertiefung (18) im Führungskörper (4) bzw. im Gehäuse (5) sitzen und die in jeder Stellung des Gehäuses (5) auf Druck vorgespannt ist.

6. Greifvorrichtung nach einem der Ansprüche 1 bis 5, bei der sich die beiden Greifbacken (6) über an ihren Endbereichen drehbar gelagerte Rollen (14) auf der Führungsfläche des Steuerelementes (13) abstützen.

7. Greifvorrichtung nach einem der Ansprüche 1 bis 6, bei dem die beiden Greifbacken (6) mittels einer Zugfeder (15) in Richtung auf ihre geöffnete Aufnahmestellung hin vorgespannt sind.

8. Greifvorrichtung nach Anspruch 7, bei welcher die Zugfeder (15) an jedem ihrer Endbereiche jeweils in eine Aufnahmeöffnung (16) des zugeordneten Greifbackens (6) hineinragt und mit ihrem Ende dort am Greifbacken (6) befestigt ist.

## Claims

1. A gripping apparatus (8) for gripping and holding elongated workpieces, in particular for bending machines, said apparatus comprising
- a housing (5), carrying two gripping jaws (6), which are movable respectively between an opened receiving position and a closed clamping position, and comprising a guiding body (4), which supports the housing (5) such that the housing (5) is displaceable over a predetermined maximum travel distance from an initial position to an end position, wherein the gripping jaws (6) are mounted to the guiding body's (4) end region in the extension direction of the housing (5), each of said gripping jaws (6) being pivotable about an axis of rotation (7);
- wherein the guiding body (4) and the housing (5) are oriented along a common longitudinal axis (M), in which a control element (13), which is movable relative to the housing (5) and to the gripping jaws (6), is also located at the end of a rod (10), which is movable within the guiding body (4), said control element (13) comprising a control surface, which is located in a plane of intersection perpendicular to the axes of rotation (7) of the gripping jaws (6) and comprising the longitudinal axis (M), said control surface being symmetrical to the longitudinal axis (M) and tapering away from the rod (10) in the extension direction, with the central axis of the control element (13) being centrally located between both gripping jaws (6), and the control element (13) being displaceable between an extended end position, in which it spreads apart the two gripping jaws' (6) end regions facing it, so as to assume the clamping position of the gripping jaws (6), and a retracted end position, in which the end regions of the gripping jaws (6) converge so as to assume their opened receiving position, and the control element (13), in its retracted end position, abutting against a stop in the housing (5), **characterized in that** the housing (5) adjoins the guiding body (4) such that the housing (5), in its initial position, contacts the side of the guiding body (4) facing the housing (5), and that the housing (5), in its extended end position, is the maximum travel distance away from the guiding body, the housing (5) being constantly spring-biased (17) in a direction away from the guiding body (4), and that the control element (13), having reached its retracted end position upon being retracted, during a further movement in its retraction direction, takes the housing (5) along, against the spring bias of the latter relative to the guiding body (4), until the housing (5) contacts the guiding body (4).

2. The gripping apparatus as claimed in claim 1, wherein the housing (5) is supported by two guiding rods (9) so as to be displaceable within the guiding body (4), said guiding rods (9) being located directly opposite each other relative to the rod (10) and parallel to the latter, each guiding rod (9) being provided with a stop head (12) which, when the housing (5) has achieved its maximum extension, contacts a stop surface on the guiding body (4).

3. The gripping apparatus as claimed in claim 2, wherein the stop head (12) of each guiding rod (9) is provided as an elastic part.

4. The gripping apparatus as claimed in claim 3, wherein each elastic part (12) is a plastic pin.

5. The gripping apparatus as claimed in any one of claims 1 to 4, wherein the spring bias between the housing (5) and the guiding body (4) is effected by a coil spring (17) which is arranged around the rod (10) and whose end regions are each fitted in a corresponding recess (18) in the guiding body (4) or in the housing (5), respectively, and which is pressure-biased in any position of the housing (5).

6. The gripping apparatus as claimed in any one of claims 1 to 5, wherein both gripping jaws (6) are supported on the guiding surface of the control element (13) by rollers (14) which are rotatably supported at the end regions of the gripping jaws (6).

7. The gripping apparatus as claimed in any one of claims 1 to 6, wherein the two gripping jaws (6) are biased towards their opened receiving position by a tension spring (15).

8. The gripping apparatus as claimed in claim 7, wherein the tension spring (15) has each of its end regions extending into a receiving opening (16) of the assigned gripping jaw (6) and has its end fixed to the gripping jaw (6) there.

## Revendications

1. Dispositif preneur (8) pour prendre et maintenir des pièces longues à usiner, notamment pour des machines à plier, avec
- un boîtier (5) qui supporte deux mâchoires de saisie (6) mobiles chacune entre une position ouverte de saisie et une position fermée de serrage et avec un corps de guidage (4) qui supporte à coulissement le boîtier (5) sur une distance maximale prédéterminée de sortie depuis une position de départ rentrée jusqu'à une position terminale déployée, les deux mâchoires de saisie (6) étant disposées, chacune de façon à pouvoir tourner autour d'un axe (7), dans le sens du déploiement du boîtier, sur une zone d'extrémité de celui-ci, ,
- dans lequel le corps de guidage (4) et le boîtier (5) sont alignés sur un axe longitudinal commun (M) sur lequel se trouve aussi, à l'extrémité d'une tige (10) coulissant à l'intérieur du corps de guidage (4), un élément de commande (13), mobile par rapport au boîtier (5) et aux mâchoires de saisie (6), qui présente, dans un plan de coupe incluant l'axe longitudinal (M,) et perpendiculairement à l'axe de rotation (7), des mâchoires de saisie (6), une surface de commande symétrique par rapport à l'axe longitudinal (M) se rétrécissant dans le sens du déploiement en s'éloignant de la tige (10), l'axe médian de l'élément de commande (13) se trouvant au milieu entre les mâchoires de saisie (6) et l'élément de commande (13) pouvant être déplacé entre un position terminale déployée, dans laquelle les deux zones terminales tournées vers lui des deux mâchoires de saisie (6) sont écartées l'une de l'autre pour que les mâchoires de saisie (6) soient en position de serrage et une position rentrée, dans laquelle les zones terminales des mâchoires de saisie (6) se rapprochent pour se mettre en position ouverte de saisie et dans lequel l'élément de commande (13) se rapproche d'une butée dans sa position terminale rentrée dans le boîtier, **caractérisé en ce que** le boîtier (5) se raccorde au corps de guidage (4) de telle façon que, dans sa position terminale rentrée, il repose contre la surface du corps de guidage (4) tournée vers lui et, dans sa position terminale déployée il soit éloigné du corps de guidage (4) de la distance maximale de déploiement, le boîtier (5) étant déjà précontraint par un ressort (17) dans la direction opposée au corps de guidage (4) et **en ce que** l'élément de commande (13) lors de la rentrée, après avoir atteint sa position terminale rentrée, lors d'un mouvement ultérieur dans sa direction de rentrée, entraîne le boîtier (5) contre la précontrainte par le ressort (17) relativement au corps de guidage (4) jusqu'à butée contre celui-ci.

2. Dispositif preneur selon la revendication 1, dans lequel le boîtier (5) est monté coulissant dans le corps de guidage (4) par l'intermédiaire de deux barres de guidage (9) directement superposées entre elles par rapport à la tige (10) et parallèles à celle-ci, qui sont chacune pourvue d'une tête de butée (12) qui, pour un parcours de sortie maximal, vient au contact avec une surface d'arrêt située sur le corps de guidage (4).

3. Dispositif preneur selon la revendication 2, dans lequel la tête de butée (12) de chaque barre de guidage (9) est constituée par une pièce élastique.

4. Dispositif preneur selon la revendication 3, dans lequel chaque pièce élastique (12) est un tenon en matière plastique.

5. Dispositif preneur selon l'une des revendications 1 à 4, dans lequel la précontrainte par ressort entre le boîtier (5) et le corps de guidage (4) s'effectue au moyen d'un ressort à boudin (17) disposé autour de la tige (10), dont les zones d'extrémité reposent respectivement dans un évidement (18) correspondant dans le corps de guidage (4) ou dans le boîtier (5) et qui est précontraint en pression dans chaque position du boîtier.

6. Dispositif preneur selon l'une des revendications 1 à 5, dans lequel les deux mâchoires de saisie (6) s'appuient sur la surface de guidage de l'élément de commande (13) au moyen de galets montés rotatifs dans leurs zones d'extrémité (13).

7. Dispositif preneur selon l'une des revendications 1 à 6, dans lequel les deux mâchoires de saisie (6) sont précontraintes vers leur position ouverte de saisie au moyen d'un ressort de traction.

8. Dispositif preneur selon la revendication 7, dans lequel le ressort de traction (15) pénètre à chacune de ses zones d'extrémité dans une ouverture de logement (16) de la mâchoire (6) concernée et y est fixé à la mâchoire par son extrémité.
